# EUROPEAN PATENT SPECIFICATION

(11) **EP 3 817 026 B1**
(45) Date of publication and mention of the grant of the patent: **05.03.2025**
(21) Application number: 20204495.4
(22) Date of filing: 28.10.2020
(51) Int. Cl.: H01H 85/08, H01H 85/10, H01H 85/00, H01H 85/11, H01H 85/041

(54) **SAFETY DEVICE AND BATTERY USING THE SAME**
SICHERHEITSVORRICHTUNG UND BATTERIE MIT EINER SOLCHEN SICHERHEITSVORRICHTUNG
DISPOSITIF DE SÉCURITÉ ET BATTERIE L'UTILISANT

(30) Priority: 30.10.2019 CN 201911045022
(43) Date of publication of application: 05.05.2021
(73) Proprietor: Globe (Jiangsu) Co., Ltd., Zhonglou District Changzhou, Jiangsu 213023 (CN)
(72) Inventor: LUO, Ming, Changzhou, Jiangsu 213023 (CN); ZHUANG, Xian, Changzhou, Jiangsu 213023 (CN); WANG, Huage, Changzhou, Jiangsu 213023 (CN); LIU, Chuanjun, Changzhou, Jiangsu 213023 (CN)
(74) Representative: Bergenstråhle & Partners AB

(56) References cited:
- DE-U1- 202013 008 375
- DE-U1- 212017 000 280
- US-A- 2 858 396
- US-A- 4 689 598
- US-A- 5 373 278
- US-A1- 2014 240 942
- US-A1- 2017 263 407

## Description

### Technical Field

The invention relates to a safety device for preventing overcurrent and further to a battery pack including the safety device.

### Background Art

Fuses, also called current fuses, are defined by IEC127 standard as "fuse-link". A fuse is used for overload protection. Fuses can be blown to cut off current to secure safe operation of a circuit when the current of the fuse rises above a certain threshold value in an abnormal situation.

US 4,689,598 A discloses an electrical fuse having an element which includes a strip of conductive metal connectable to the fuse terminals, the strip of conductive material having a plurality of holes through its thickness dimension spaced along the center line of its width, successive ones of the holes through the strip each having a slot joining that hole with an opposite one of the edges from the edge joined by the adjacent hole and its associated slot.

US 2017/0263407 A1 discloses a fuse including a fuse element and a fuse body. A portion of the fuse element is housed in the fuse body. The fuse element includes a first terminal and a second terminal disposed outside of the fuse body.

US 2,858,396 A discloses a bimetallic fuse element comprising pairs of high melting point elements of tinned copper connected together by a low melting-point element of a lead-tin alloy in which the high melting-point elements have narrow regions of reduced cross-section provided either by a series of holes or shallow grooves.

DE 20 2013 008 375 U1 discloses an electrical fuse, in particular for a motor vehicle, having two terminal regions and a melting range of a conductor strip with an integrated holder and a fusible element mounted therein connecting them, which has a low melting material which overload current melts at one and into the conductor strip diffuses, wherein the fusible element is introduced through a mechanical fastening operation.

US 5,373,278 A discloses a blade type plug-in fuse for high nominal currents. It is of the type comprising a case in which is partially housed a conductive unit provided with two flat connection terminal blades whose free ends are situated outside the case, said connection terminal blades being connected inside the case by a flat fuse link part on at least one side and substantially in the center of which is deposited a drop of metal of predetermined area of contact, and it is characterized in that the fuse link part comprises a central gauging zone of width smaller than the width of the adjacent lateral zones connecting with the connection terminal blades, the area of contact of said drop being at least greater than half the area of the gauging zone.

However, present fuses conduct heat fast, such that the heat cannot be concentrated to the fusing position, which causes that the fuse is not blown in time or is blown at an abnormal position.

Therefore, there is a need for a new safety device to solve the above problem in the prior art.

### Summary of Invention

The present invention provides a safety device, which can reduce a diffusion speed of heat and causes a connecting part thereof to be blown in time.

To achieve the above object, a first aspect of the present invention provides the following technical solution: a safety device for preventing overcurrent comprises a first heat dissipation portion made of an electrically conductive material, a second heat dissipation portion made of an electrically conductive material, a connecting part made of an electrically conductive material arranged between the first heat dissipation portion and the second heat dissipation portion, and provided with at least one heat locking hole. The connecting part has a first heat locking portion, a fusing portion, and a second heat locking portion, wherein the at least one heat locking hole is located in the first heat locking portion and/or the second heat locking portion. Each of the first heat dissipation portion and the second heat dissipation portion is provided with a mounting pin and at least an auxiliary pin, both mounting pins and the auxiliary pins being suitable for mounting the safety device on a printed circuit board..

In one embodiment of the present disclosure, two first auxiliary heat locking openings are provided on each side of a jointing portion between the first heat dissipation portion and the connecting part, and two second auxiliary heat locking openings are provided on each side of a jointing portion between the second heat dissipation portion and the connecting part.

In one embodiment of the present disclosure, the number of the heat locking holes is two, the two heat locking holes are a first heat locking hole located in the first heat locking portion and a second heat locking hole located in the second heat locking portion.

In one embodiment of the present disclosure, the first heat locking portion, the second heat locking portion and the fusing portion all have a symmetrical structure, the first heat locking portion is provided with a first edge and a second edge which are symmetrical in position and shape, the second heat locking portion is provided with a third edge and a fourth edge which are symmetrical in position and shape, the fusing portion is provided with a fifth edge and a sixth edge which are symmetrical in position and shape, the first edge, the fifth edge and the third edge are sequentially connected, and the second edge, the sixth edge and the fourth edge are sequentially connected.

In one embodiment of the present disclosure, the first heat locking hole and the second heat locking hole are symmetrically in shape, and the first heat locking hole has the same symmetry axis as the first heat locking portion, and the second heat locking hole has the same symmetry axis as the second heat locking portion.

In one embodiment of the present disclosure, a maximum distance from the fifth edge to the sixth edge is less than or equal to a minimum distance from the first edge to the second edge, and also less than or equal to a minimum distance from the third edge to the fourth edge.

In one embodiment of the present disclosure, a sum of two minimum distances from any two symmetrical positions on the first edge and the second edge to the first heat locking hole is greater than a minimum distance from the fifth edge to the sixth edge.

In one embodiment of the present disclosure, a sum of two minimum distances from any two symmetrical positions on the third edge and the fourth edge to the second heat locking hole is greater than a minimum distance from the fifth edge to the sixth side.

In one embodiment of the present disclosure, the heat locking hole is filled with a fusible material.

In one embodiment of the present disclosure, the fusing portion is provided with a fusing hole having a symmetrical shape.

In one embodiment of the present disclosure, the fusing hole is filled with an auxiliary fuse material.

In one embodiment of the present disclosure, the fusing portion is integrally formed with the first heat locking portion and the second heat locking portion.

In one embodiment of the present disclosure, the fusing portion has a welded connection with the first heat locking portion and the second heat locking portion, the first heat locking portion and the second heat locking portion are made of a high thermally conductive material, and the fusing portion is made of a fusing material.

To achieve the above object, a second aspect of the present invention provides a battery pack, comprising a housing, a circuit board disposed in the housing, a safety device according to the first aspect mounted to the circuit for preventing overcurrent.

### Brief Description of Drawings

FIG. 1 is a perspective view of a safety device according to a first embodiment of the present disclosure.
FIG.2 is a top view of the safety device shown in FIG. 1.
FIG.3 is a perspective view of the safety device according to another embodiment of the present disclosure.
FIG.4 is a perspective view of the safety device according to another embodiment of the present disclosure.
FIG.5a is a top view of the safety device according to another embodiment of the present disclosure.
FIG.5b is a top view of the safety device according to another embodiment of the present disclosure.
FIG.5c is a top view of the safety device according to another embodiment of the present disclosure.
FIG.6a is a top view of the safety device according to another embodiment of the present disclosure.
FIG.6b is a perspective view of the safety device according to another embodiment of the present disclosure.
FIG.6c is a perspective view of the safety device according to another embodiment of the present disclosure.
FIG.6d is a perspective view of the safety device according to another embodiment of the present disclosure.
FIG.6e is a perspective view of the safety device according to another embodiment of the present disclosure.
FIG.6f is a top view of the safety device according to another embodiment of the present disclosure.
FIG.7a is a top view of the safety device according to another embodiment of the present disclosure.
FIG.7b is a top view of the safety device according to another embodiment of the present disclosure.
FIG.7c is a top view of the safety device according to another embodiment of the present disclosure.
FIG.7d is a top view of the safety device according to another embodiment of the present disclosure.
FIG.8 is a perspective view of the safety device mounted to a circuit board according to an embodiment of the present disclosure.

### Description of Embodiments

Exemplary embodiments will be described in detail herein, and the embodiments are illustrated in the accompanying drawings. When the following description refers to the drawings, unless otherwise indicated, the same numbers in different drawings indicate the same or similar elements. The embodiments described in the following exemplary embodiments do not represent all embodiments consistent with the present invention. On the contrary, they are only examples of devices consistent with some aspects of the invention as detailed in the appended claims.

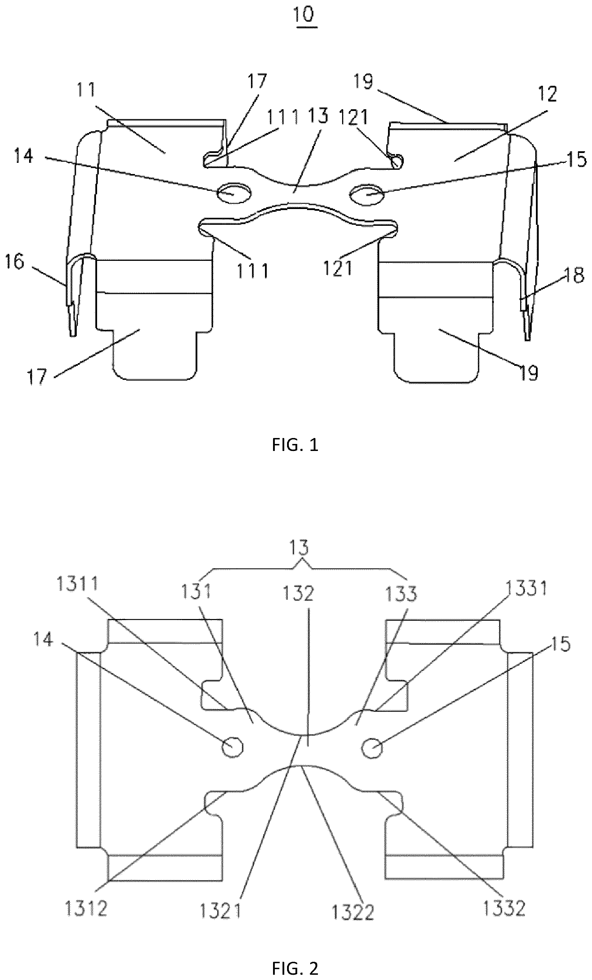

In view of the problem in the prior art, an embodiment of the present disclosure provides a safety device. Referring to FIG.1, the safety device 10 comprises a first dissipation portion 11, a second dissipation portion 12, and a connecting part 13 disposed between the first dissipation portion 11 and the second dissipation portion 12. The connecting part 13 is provided with a first heat locking hole 14 and a second heat locking hole 15. The first heat dissipation portion 11 is provided with a first mounting pin 16 on a left side thereof (i.e., the side directed away from the connecting part 13), and two first auxiliary pins 17 provided on a front side and a rear side of the first heat dissipation portion 11, respectively. The second heat dissipation portion 12 is provided with a second mounting pin 18 on a right side thereof (i.e., the side directed away from the connecting part 13) and two second auxiliary pins 19 provided on a front side and a rear side of the second heat dissipation portion 12, respectively.

Referring to FIG.1, the first dissipation portion 11 has two first auxiliary heat locking openings 111 disposed at both sides of a jointing part of the first heat dissipation portion 11 and the connecting portion 13. The second dissipation portion12 has two second auxiliary heat locking openings 121 disposed at both sides of a jointing part of the second heat dissipation portion 12 and the connecting portion 13. The two first auxiliary heat locking opening 111 reduces a connecting surface of the first dissipation portion 11 and the connecting part 13, and the second auxiliary heat locking opening 121 reduces a connecting surface of the second dissipation portion 12, i.e. the connecting part 13 can slow down the heat transfer speed and avoid a rapid temperature diffusion.

FIG.2 is a top view of the safety device shown in FIG.1. Referring to FIG.2, the connecting part 13 has a first heat locking portion 131, a fusing portion 132 and a second heat locking portion 133 in sequence from left to right. The connecting part 13 has a symmetrical structure, the first heat locking hole 14 is located in the first heat locking portion 131, the second heat locking hole 15 is located in the second heat locking portion 133 and the fusing portion 132 is integrally formed with the first heat locking portion 131 and the second heat locking portion 133.

In some embodiments of the present disclosure, the first heat locking portion 131, the integrally formed fusing portion 132, and the second heat locking portion 133 are made of a metallic material, such as copper alloy, nickel, aluminum, etc.

In some embodiments of the present disclosure, the first heat locking portion 131, the integrally formed fusing portion 132, and the second heat locking portion 133 are made of brass.

In some embodiments of the present disclosure, referring to FIG.2, the first heat locking portion 131, the fusing portion 132 and the second heat locking portion 133 all have a symmetrical structure. The first heat locking portion 131 is provided with a first edge 1311 and a second edge 1312, which are symmetrical in position and shape. The second heat locking portion 133 is provided with a third edge 1331 and a fourth edge 1332, which are symmetrical in position and shape. The fusing portion 132 is provided with a fifth edge 1321 and a sixth edge 1322, which are symmetrical in position and shape. The first edge 1311 is connected with one end of the fifth edge 1321 and the other end of the fifth edge 1321 is connected with the third edge 1331. The second edge 1312 is connected with one end of the sixth edge 1322 and the other end of the sixth edge 1322 is connected with the fourth edge 1332. The first heat locking hole 14 is located on a symmetry axis of the first heat locking portion 131, and the second heat locking hole 15 is located on a symmetry axis of the second heat locking portion 133.

In some embodiments of the present disclosure, the first heat locking portion 131 has the same axis of symmetry as the second heat locking portion 132. In some preferred embodiments of the present disclosure, a maximum distance from the fifth edge 1321 to the sixth edge 1322 is less than or equal to a minimum distance from the first edge 1311 to the second edge 1312, and is also less than or equal to a minimum distance from the third edge 1331 to the fourth edge 1332. A sum of two minimum distances from any two symmetrical positions on the first edge 1311 and the second edge 1312 to the first heat locking hole 14 respectively, is greater than a minimum distance from the fifth edge 1321 to the sixth edge 1322. A sum of two minimum distances from any two symmetrical positions on the third edge 1331 and the fourth edge 1332 to the second heat locking hole 15 respectively, is also greater than the minimum distance from the fifth edge 1321 to the sixth edge 1322. The maximum distance between two edges is a maximum value of the distances between all the symmetrical points on the two edges; the minimum distance between two edges is the minimum value of the distances between all the symmetrical points on the two edges.

In some embodiments of the present disclosure, the first heat locking hole 14 and the second heat locking hole 15 are both symmetrical in shape, and the first heat locking hole 14 has the same symmetry axis as the first heat locking portion 131, and the second heat locking hole 15 has the same symmetry axis as the second heat locking portion 133. Therefore, a distance from a position of the first edge 1311 to the center of the first heat locking hole 14 is equal to a distance from a corresponding symmetrical position of the second edge 1312 to the center of the first heat locking hole 14, and a distance from a position of the third edge 1331 to the center of the second heat locking hole 15 is equal to a distance from a corresponding symmetrical position of the fourth edge 1332 to the center of the second heat locking hole 15.

In some embodiments of the present disclosure, the first heat locking hole 14 and the second heat locking hole 15 have the same shape and size and are symmetrically in position.

In some embodiments of the present disclosure, referring to FIG.2, the first heat locking hole 14 and the second heat locking hole 15 are circular in shape.

In some embodiments of the present disclosure, the first heat locking hole 14 and the second heat locking hole 15 are filled with a fusible material, which can melt quickly after absorbing heat, in order to decrease the temperature of the first heat locking portion 131 and the second heat locking portion 133, which extends the fusing time of the fusing portion 132 and avoid fusing when the fusing requirement is not met.

In some embodiments of the present disclosure, the fusible material is tin whose melting point is 231 °C.

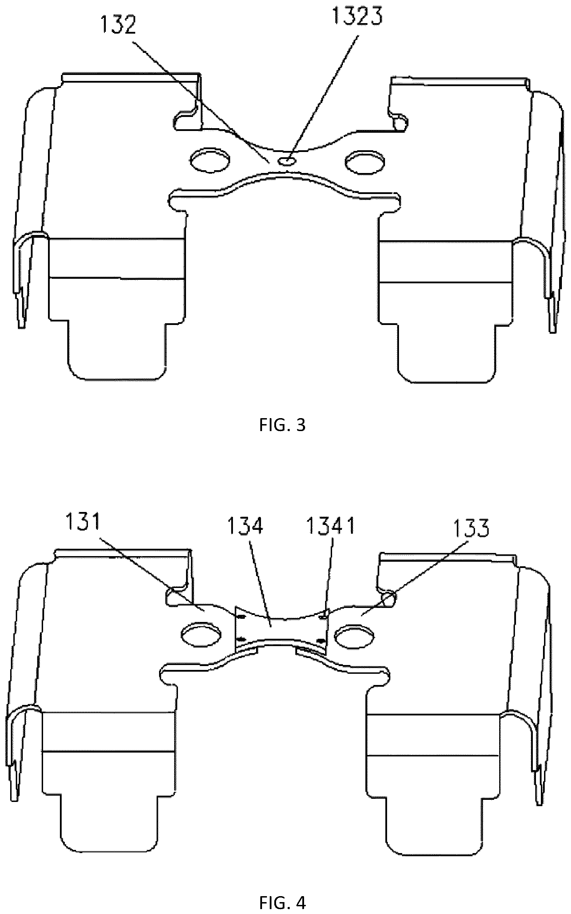

FIG.3 is a perspective view of another safety device according to some embodiments of the present disclosure. The safety device shown in FIG.3 has the same structure as the safety device shown in FIG.1, with the difference that the fusing portion 132 is provided with a fusing hole 1323.

In some embodiments of the invention, the first heat locking hole 14 communicates with the second heat locking hole 15 by the fusing hole 1323.

In some embodiments of the present disclosure, the fusing hole 1323 of the fusing portion 132 is filled with a fusible material. When a high heavy current passes through the fusing portion 132, the fusible material can preferentially melt into liquid, according to a diffusion principle- A very strong diffusion motion will occur between the fusible material and the fusing portion 132 and since a high temperature of the fusing portion 132 is more conducive to the diffusion motion tension will occur between the fusible material in liquid form and the fusing portion 132 in solid form during the diffusion process. The tension aggravates the diffusion motion and easily blows the fusing portion 132.

In some embodiments of the present disclosure, the fusible material is tin.

In some embodiments of the present disclosure, the fusing hole 1323 has a symmetrical shape, such that a distance from the fifth edge 1321 to the center of the fusing hole 1323 is equal to the distance from the symmetrical position of the sixth edge 1322 to the center of the fusing hole 1323.

In some embodiments of the present disclosure, the shape of the fusing hole is oval, square, diamond, circle, etc., and the shape of the first heat locking hole and the second heat locking hole may also have corresponding shapes , but are not limited thereto.

FIG.4 is a perspective view of another safety device according to some embodiments of the present disclosure. The safety device shown in FIG.4 has the same structure as the safety device shown in FIG.1, with the difference that the fusing portion is a welded fusing portion 134. The welded fusing portion 134 is connected with the first heat locking portion 131 and the second heat locking portion 133 in a welded manner. The first heat locking portion 131 and the second heat locking portion 133 are made of a highly heat conductive material, and the welded fusing portion 134 is made of a fusing material. In this case the first heat locking portion 131 and the second heat locking portion 133 do not need to be blown, and their fusing characteristics do not need to be considered, so that the first heat locking portions 131 and the second heat locking portion 133 can made of any highly thermal conductive material known in this field.

In some embodiments of the present disclosure, referring to FIG.4, the welded fusing portion 134 has some bumps 1341 after being welded by resistance welding.

In some embodiments of the present disclosure, the welded fusing portion 134 has no bumps after being welded by laser welding.

In some embodiments of the present disclosure, the fusing material of the welded fusing portion 134 is aluminum, whose melting point is 660 °C , which can meet the fusing requirements.

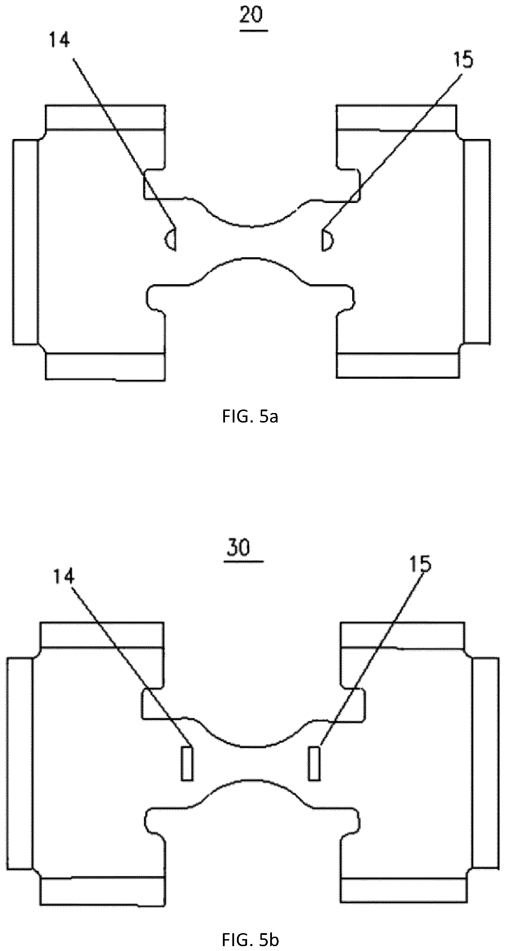

FIG.5a is a top view of another safety device according to some embodiments of the present disclosure. Referring to FIG.5a and FIG.1, the safety device 20 differs from the safety device 10 in that the first heat locking hole 14 and the second heat locking hole 15 are semicircular.

FIG.5b is a top view of another safety device according to some embodiments of the present disclosure. Referring to FIG.5b and FIG.1, the safety device 30 differs from the safety device 10 in that the first heat locking hole 14 and the second heat locking hole 15 are rectangular.

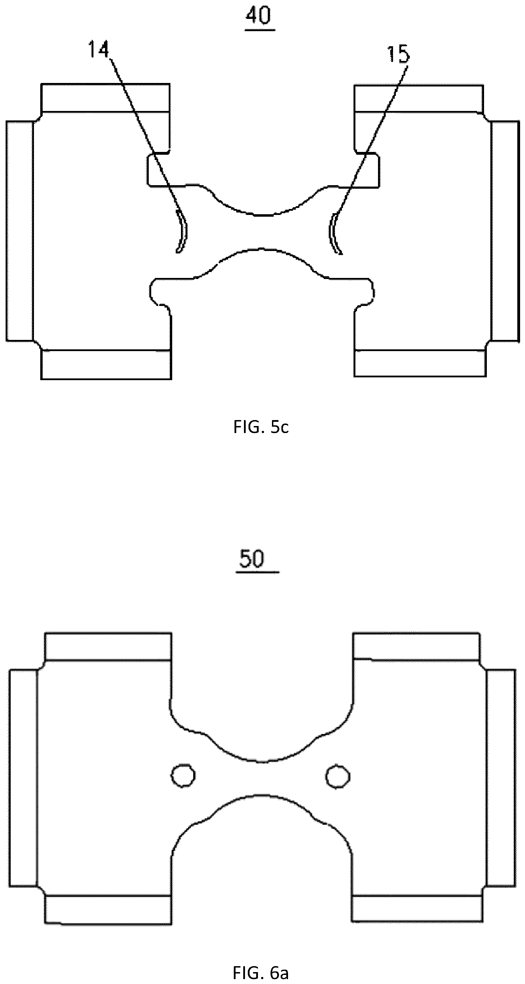

FIG.5c is a top view of another safety device according to some embodiments of the present disclosure. Referring to FIG.5c and FIG.1, the safety device 40 differs from the safety device 10 in that the first heat locking hole 14 and the second heat locking hole 15 have a circular arc form.

FIG.6a is a top view of another safety device according to some embodiments of the invention. Referring to FIG.6a and FIG. 1, the safety device 50 differs from the safety device 10 in that the safety device 50 does not have the first auxiliary heat locking slot 111 and the second auxiliary heat locking slot 121.

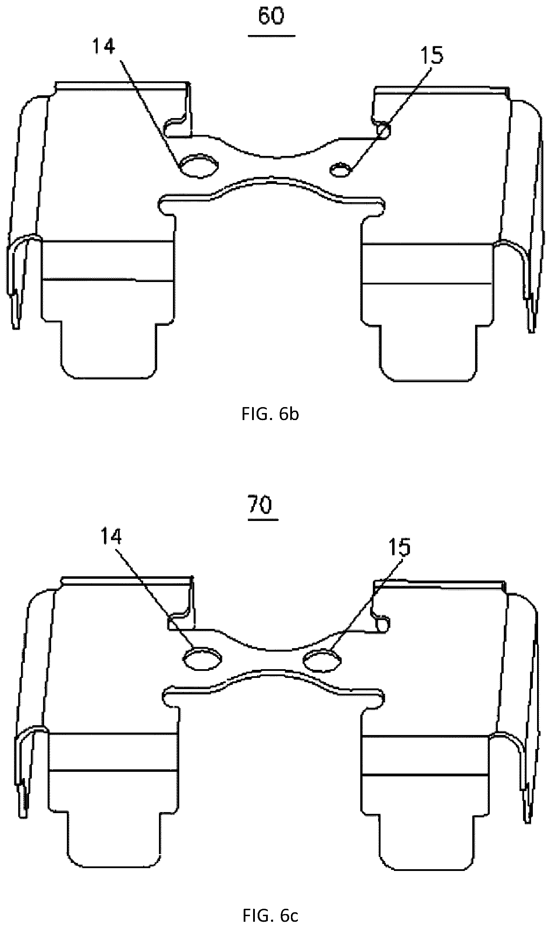

FIG.6b is a perspective view of another safety device according to some embodiments of the present disclosure. Referring to FIG.6b and FIG. 1, the safety device 60 differs from the safety device 10 in that the first heat locking hole 14 and the second heat locking hole 15 are different in size.

FIG.6c is a perspective view of another safety device according to some embodiments of the present disclosure. Referring to FIG.6c and FIG. 1, the safety device 70 differs from the safety device 10 in that the first heat locking hole 14 and the second heat locking hole 15 have e non-symmetrical positions.

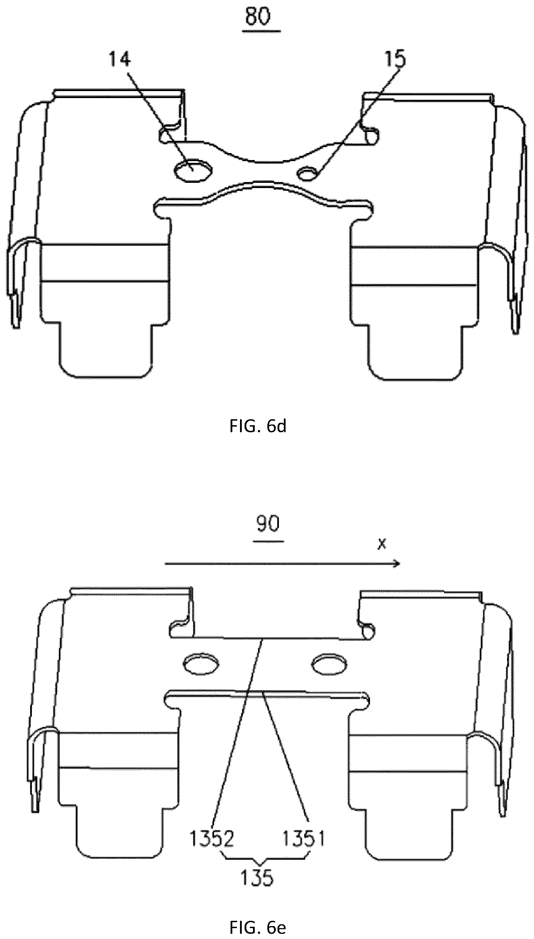

FIG.6d is a perspective view of another safety device according to some embodiments of the present disclosure. Referring to FIG.6d and FIG.1, the safety device 80 differs from the safety device 10 in that the first heat locking hole 14 and the second heat locking hole 15 have asymmetric positions and are different in size.

FIG.6e is a perspective view of another safety device according to some embodiments of the present disclosure. Referring to FIG.6e and FIG.1, the safety device 90 differs from the safety device 10 in that a first connection section 135 comprises a first front edge 1351 and a first rear edge 1352, both of which are parallel to the X-axis.

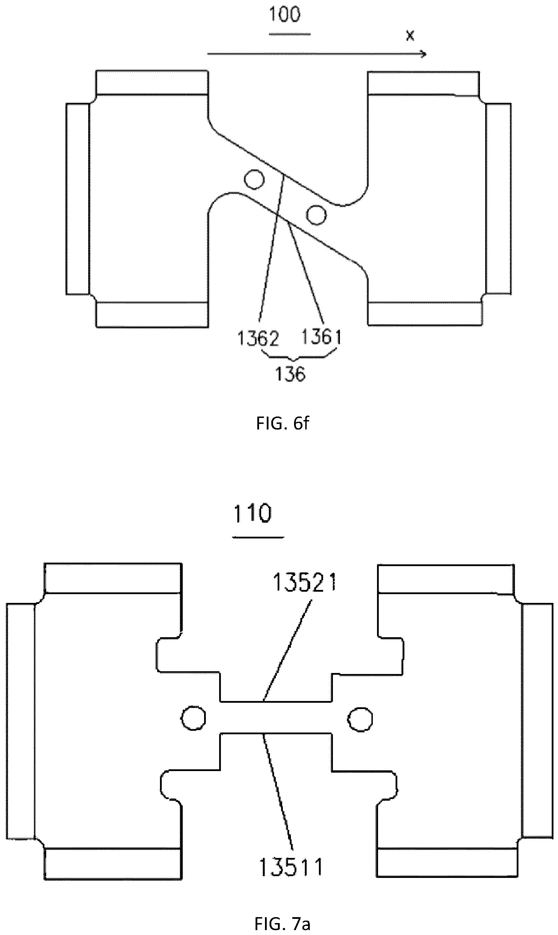

FIG.6f is a top view of another safety device according to some embodiments of the invention. Referring to FIG.6f, 6e and FIG.1, the safety device 100 differs from the safety device 90 in that a second connecting part 136 comprises a second front edge 1361 and a second rear edge 1362 parallel to the second rear edge 1362, wherein the second front edge 1361 is non-parallel to X-axis, and the first auxiliary heat locking portion and the second auxiliary heat locking portion are removed.

FIG.7a is a top view of another safety device according to some embodiments of the present disclosure. Referring to FIG.7a and FIG.6e, the safety device 110 differs from the safety device 90 in that a first rectangular notch 13511 is provided at the midpoint of the first front edge 1351, a second rectangular notch 13521 is provided at the midpoint of the first rear edge 1352, and the first rectangular notch 13521 and the second rectangular notch 13511 are identical in size.

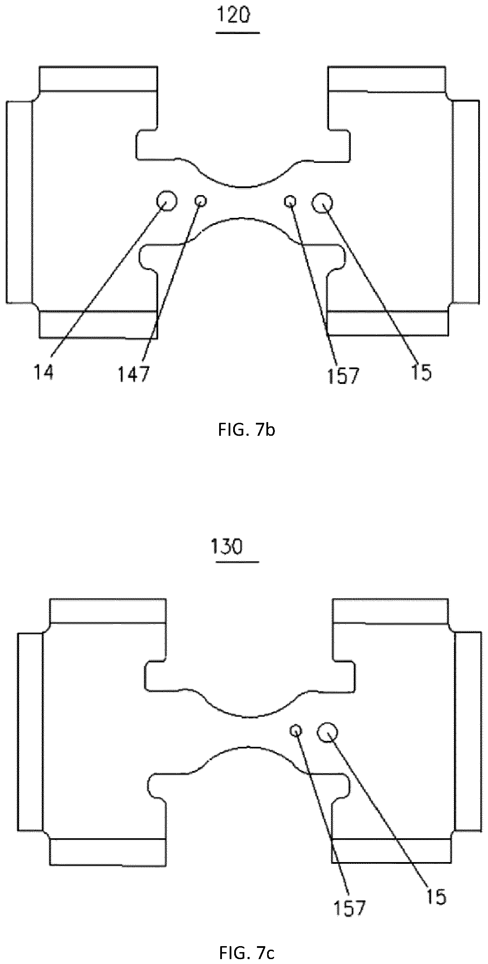

FIG.7b is a top view of another safety device according to some embodiments of the present disclosure. Referring to FIG.7b and FIG.1, the safety device 120 differs from the safety device 10 in that a first sub heat locking hole 147 and a second sub heat locking hole 157 are symmetrically arranged on the central connecting line between the first heat locking hole 14 and the second heat locking hole 15, and have the same symmetry axis as the first heat locking hole 14 and the second heat locking hole 15.

FIG.7c is a top view of another safety device according to some embodiments of the present disclosure. Referring to FIG.7c and FIG.7b, the safety device 130 differs from the safety device 120 in that the safety device 130 only is provided with the second heat locking hole 15 and the second sub heat locking hole 157, and in that the first heat locking hole 14 and the first sub heat locking hole 147 are removed.

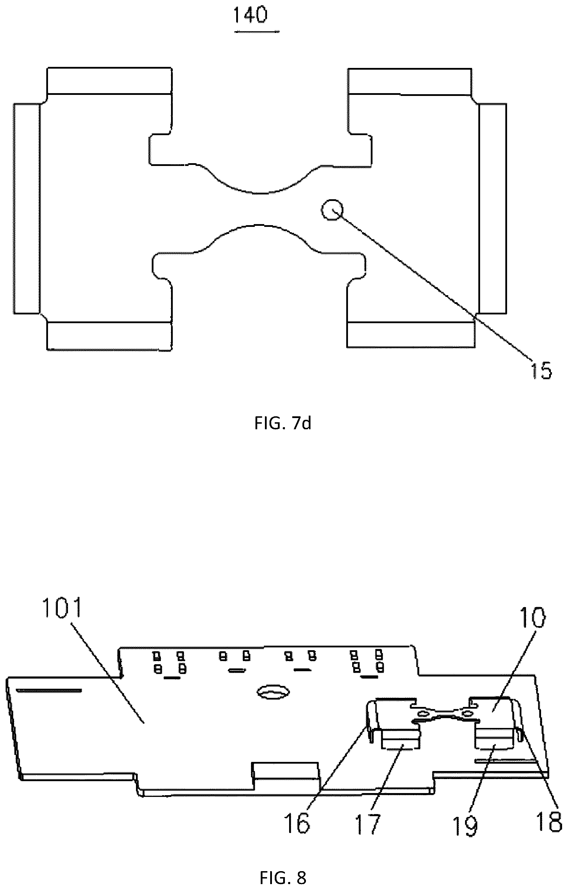

FIG.7d is a top view of another safety device according to some embodiments of the present disclosure. Referring to FIG.7d and FIG.1, the safety device 140 differs from the safety device 10 in that the safety device 140 is provided with a second heat locking hole 15, and in that the first heat locking hole 14 is removed.

FIG.8 is a perspective view of the installation of a safety device according to some embodiments of the present disclosure. Referring to FIG.8 and FIG.1, the safety device 10 is mounted on the printed circuit board 101 through the first mounting pin 16, the second mounting pin 18, the first auxiliary pin 17 and the second auxiliary pin 19.

## Claims

1. A safety device (10, 20, 30 ,40, 50) for preventing overcurrent, comprising:
a first heat dissipation portion (11) made of an electrically conductive material;
a second heat dissipation portion (12) made of an electrically conductive material; and
a connecting part (13) made of an electrically conductive material arranged between the first heat dissipation portion (11) and the second heat dissipation portion (12), and provided with at least one heat locking hole (14, 15),
wherein the connecting part (13) has a first heat locking portion (131), a fusing portion (132), and a second heat locking portion (133), and wherein the at least one heat locking hole (14, 15) is located in the first heat locking portion (131) and/or the second heat locking portion (133),
**characterized in that** each of the first heat dissipation portion (11) and the second heat dissipation portion (12) is provided with a mounting pin (16, 18) and at least an auxiliary pin (17, 19), both mounting pins (16, 18) and the auxiliary pins (17, 19) being suitable for mounting the safety device (10, 20, 30, 40, 50) on a printed circuit board (101).

2. The safety device according to any one of claims 1 or 2, wherein two first auxiliary heat locking openings (111) are provided on each side of a jointing portion between the first heat dissipation portion (11) and the connecting part (13), and two second auxiliary heat locking openings (121) are provided on each side of a jointing portion between the second heat dissipation portion (12) and the connecting part (13).

3. The safety device according to any one of claim 1 to 3, wherein the number of the heat locking holes (14, 15) is two and wherein the two heat locking holes (14, 15) are a first heat locking hole (14) located in the first heat locking portion (131) and a second heat locking hole (15) located in the second heat locking portion (133).

4. The safety device according to claim 4, wherein the first heat locking portion (131), the second heat locking portion (133) and the fusing portion (132) all have a symmetrical structure, the first heat locking portion (131) is provided with a first edge (1311) and a second edge (1312) which are symmetrical in position and shape, the second heat locking portion (133) is provided with a third edge (1331) and a fourth edge (1332) which are symmetrical in position and shape, the fusing portion (132) is provided with a fifth edge (1321) and a sixth edge (1322) which are symmetrical in position and shape, the first edge (1311), the fifth edge (1321) and the third edge (1331) are sequentially connected, and wherein the second edge (1312), the sixth edge (1322) and the fourth edge (1332) are sequentially connected.

5. The safety device according to any one of claims 4 to 5, wherein the first heat locking hole (14) and the second heat locking hole (15) are symmetrically in shape, and the first heat locking hole (14) has the same symmetry axis as the first heat locking portion (131), and the second heat locking hole (15) has the same symmetry axis as the second heat locking portion (133).

6. A safety device according to any one of claims 5 or 6, wherein a maximum distance from the fifth edge (1321) to the sixth edge (1322) is less than or equal to a minimum distance from the first edge (1311) to the second edge (1312), and also less than or equal to a minimum distance from the third edge (1331) to the fourth edge (1332).

7. A safety device according to claim 7, wherein a sum of two minimum distances from any two symmetrical positions on the first edge (1311) and the second edge (1312) to the first heat locking hole (14) is greater than a minimum distance from the fifth edge (1321) to the sixth edge (1322).

8. A safety device according to any one of claims 7 or 8, wherein a sum of two minimum distances from any two symmetrical positions on the third edge (1331) and the fourth edge (1332) to the second heat locking hole (15) is greater than a minimum distance from the fifth edge (1321) to the sixth side (1322).

9. The safety device according to any one of preceding claims, wherein the heat locking hole (14, 15) is filled with a fusible material.

10. The safety device according to any one of claims 4 to 10, wherein the fusing portion (132) is provided with a fusing hole (1323) having a symmetrical shape.

11. The safety device of claim 11, wherein the fusing hole (1323) is filled with an auxiliary fuse material.

12. The safety device according to any one of claims 4 to 12, wherein the fusing portion (132) is integrally formed with the first heat locking portion (131) and the second heat locking portion (133).

13. The safety device according to any one of claims 4 to 12, wherein the fusing portion (132) has a welded connection with the first heat locking portion (131) and the second heat locking portion (133), the first heat locking portion (131) and the second heat locking portion (133) are made of a high thermally conductive material, and wherein the fusing portion (132) is made of a fusing material.

14. A battery pack, comprising:
a housing;
a circuit board (101) disposed in the housing;
a safety device (10, 20, 30, 40, 50) according to any one of the preceding claims mounted to the circuit board (101) for preventing overcurrent.

## Patentansprüche

1. Sicherheitsvorrichtung (10, 20, 30, 40, 50) zum Verhindern von Überstrom, umfassend:
einen ersten Wärmeableitungsabschnitt (11), der aus einem elektrisch leitfähigen Material hergestellt ist;
einen zweiten Wärmeableitungsabschnitt (12), der aus einem elektrisch leitfähigen Material hergestellt ist; und
einen Verbindungsteil (13), der aus einem elektrisch leitfähigen Material hergestellt ist, der zwischen dem ersten Wärmeableitungsabschnitt (11) und dem zweiten Wärmeableitungsabschnitt (12) eingerichtet und mit mindestens einem Wärmeverriegelungsloch (14, 15) bereitgestellt ist,
wobei der Verbindungsteil (13) einen ersten Wärmeverriegelungsabschnitt (131), einen Schmelzabschnitt (132) und einen zweiten Wärmeverriegelungsabschnitt (133) aufweist und wobei sich das mindestens eine Wärmeverriegelungsloch (14, 15) im ersten Wärmeverriegelungsabschnitt (131) und/oder dem zweiten Wärmeverriegelungsabschnitt (133) befindet,
**dadurch gekennzeichnet, dass** jeder von dem ersten Wärmeableitungsabschnitt (11) und dem zweiten Wärmeableitungsabschnitt (12) mit einem Montagestift (16, 18) und mindestens einem Hilfsstift (17, 19) bereitgestellt ist, wobei beide Montagestifte (16, 18) und die Hilfsstifte (17, 19) zum Montieren der Sicherheitsvorrichtung (10, 20, 30, 40, 50) an einer Leiterplatte (101) geeignet sind.

2. Sicherheitsvorrichtung nach einem der Ansprüche 1 oder 2, wobei zwei erste zusätzliche Wärmeverriegelungsöffnungen (111) auf jeder Seite eines Fugenabschnitts zwischen dem ersten Wärmeableitungsabschnitt (11) und dem Verbindungsteil (13) bereitgestellt sind, und zwei zweite zusätzliche Wärmeverriegelungsöffnungen (121) auf jeder Seite eines Fugenabschnitts zwischen dem zweiten Wärmeableitungsabschnitt (12) und dem Verbindungsteil (13) bereitgestellt sind.

3. Sicherheitsvorrichtung nach einem der Ansprüche 1 bis 3, wobei die Anzahl der Wärmeverriegelungslöcher (14, 15) zwei beträgt und wobei die zwei Wärmeverriegelungslöcher (14, 15) ein erstes Wärmeverriegelungsloch (14), das sich im ersten Wärmeverriegelungsabschnitt (131) befindet, und ein zweites Wärmeverriegelungsloch (15) sind, das sich im zweiten Wärmeverriegelungsabschnitt (133) befindet.

4. Sicherheitsvorrichtung nach Anspruch 4, wobei der erste Wärmeverriegelungsabschnitt (131), der zweite Wärmeverriegelungsabschnitt (133) und der Schmelzabschnitt (132) alle eine symmetrische Struktur aufweisen, der erste Wärmeverriegelungsabschnitt (131) mit einer ersten Kante (1311) und einer zweiten Kante (1312) bereitgestellt ist, die in Position und Form symmetrisch sind, der zweite Wärmeverriegelungsabschnitt (133) mit einer dritten Kante (1331) und einer vierten Kante (1332) bereitgestellt ist, die in Position und Form symmetrisch sind, der Schmelzabschnitt (132) mit einer fünften Kante (1321) und einer sechsten Kante (1322) bereitgestellt ist, die in Position und Form symmetrisch sind, die erste Kante (1311), die fünfte Kante (1321) und die dritte Kante (1331) der Reihe nach verbunden sind, und wobei die zweite Kante (1312), die sechste Kante (1322) und die vierte Kante (1332) der Reihe nach verbunden sind.

5. Sicherheitsvorrichtung nach einem der Ansprüche 4 bis 5, wobei das erste Wärmeverriegelungsloch (14) und das zweite Wärmeverriegelungsloch (15) in der Form symmetrisch sind und das erste Wärmeverriegelungsloch (14) dieselbe Symmetrieachse aufweist wie der erste Wärmeverriegelungsabschnitt (131), und das zweite Wärmeverriegelungsloch (15) dieselbe Symmetrieachse aufweist wie der zweite Wärmeverriegelungsabschnitt (133).

6. Sicherheitsvorrichtung nach einem der Ansprüche 5 oder 6, wobei ein maximaler Abstand von der fünften Kante (1321) zur sechsten Kante (1322) kleiner als oder gleich einem minimalen Abstand von der ersten Kante (1311) zur zweiten Kante (1312), und auch kleiner als oder gleich einem minimalen Abstand von der dritten Kante (1331) zur vierten Kante (1332) ist.

7. Sicherheitsvorrichtung nach Anspruch 7, wobei eine Summe von zwei minimalen Abständen von zwei beliebigen symmetrischen Positionen an der ersten Kante (1311) und der zweiten Kante (1312) zum ersten Wärmeverriegelungsloch (14) größer ist als ein minimaler Abstand von der fünften Kante (1321) zur sechsten Kante (1322).

8. Sicherheitsvorrichtung nach einem der Ansprüche 7 oder 8, wobei eine Summe von zwei minimalen Abständen von zwei beliebigen symmetrischen Positionen an der dritten Kante (1331) und der vierten Kante (1332) zum zweiten Wärmeverriegelungsloch (15) größer ist als ein minimaler Abstand von der fünften Kante (1321) zur sechsten Seite (1322).

9. Sicherheitsvorrichtung nach einem der vorstehenden Ansprüche, wobei das Wärmeverriegelungsloch (14, 15) mit einem schmelzbaren Material gefüllt ist.

10. Sicherheitsvorrichtung nach einem der Ansprüche 4 bis 10, wobei der Schmelzabschnitt (132) mit einem Schmelzloch (1323) bereitgestellt ist, das eine symmetrische Form aufweist.

11. Sicherheitsvorrichtung nach Anspruch 11, wobei das Schmelzloch (1323) mit einem Hilfsschmelzmaterial gefüllt ist.

12. Sicherheitsvorrichtung nach einem der Ansprüche 4 bis 12, wobei der Schmelzabschnitt (132) in einem Stück mit dem ersten Wärmeverriegelungsabschnitt (131) und dem zweiten Wärmeverriegelungsabschnitt (133) gebildet ist.

13. Sicherheitsvorrichtung nach einem der Ansprüche 4 bis 12, wobei der Schmelzabschnitt (132) eine geschweißte Verbindung mit dem ersten Wärmeverriegelungsabschnitt (131) und dem zweiten Wärmeverriegelungsabschnitt (133) aufweist, der erste Wärmeverriegelungsabschnitt (131) und der zweite Wärmeverriegelungsabschnitt (133) aus einem hoch wärmeleitfähigen Material hergestellt sind, und wobei der Schmelzabschnitt (132) aus einem Schmelzmaterial hergestellt ist.

14. Batteriepack, umfassend:
ein Gehäuse;
eine Leiterplatte (101), die in dem Gehäuse angeordnet ist;
eine Sicherheitsvorrichtung (10, 20, 30, 40, 50) nach einem der vorstehenden Ansprüche, die um Verhindern von Überstrom an der Leiterplatte (101) montiert ist.

## Revendications

1. Dispositif de sécurité (10, 20, 30, 40, 50) pour empêcher une surintensité, comprenant :
une première portion de dissipation thermique (11) constituée d'un matériau électroconducteur ;
une seconde portion de dissipation thermique (12) constituée d'un matériau électroconducteur ; et
une partie de liaison (13) constituée d'un matériau électroconducteur agencée entre la première portion de dissipation thermique (11) et la seconde portion de dissipation thermique (12), et munie d'au moins un trou à verrouillage thermique (14, 15),
dans lequel la partie de liaison (13) présente une première portion à verrouillage thermique (131), une portion de fusion (132) et une seconde portion à verrouillage thermique (133), et dans lequel le au moins un trou à verrouillage thermique (14, 15) est situé dans la première portion à verrouillage thermique (131) et/ou la seconde portion à verrouillage thermique (133),
**caractérisé en ce que** chacune de la première portion de dissipation thermique (11) et de la seconde portion de dissipation thermique (12) est munie d'une broche de montage (16, 18) et d'au moins une broche auxiliaire (17, 19), les deux broches de montage (16, 18) et les broches auxiliaires (17, 19) étant adaptées au montage du dispositif de sécurité (10, 20, 30, 40, 50) sur une carte de circuit imprimé (101).

2. Dispositif de sécurité selon l'une quelconque des revendications 1 ou 2, dans lequel deux premières ouvertures auxiliaires à verrouillage thermique (111) sont disposées de chaque côté d'une portion de jonction entre la première portion de dissipation thermique (11) et la partie de liaison (13), et deux secondes ouvertures auxiliaires à verrouillage thermique (121) sont disposées de chaque côté d'une portion de jonction entre la seconde portion de dissipation thermique (12) et la partie de liaison (13).

3. Dispositif de sécurité selon l'une quelconque des revendications 1 à 3, dans lequel le nombre de trous à verrouillage thermique (14, 15) est de deux et dans lequel les deux trous à verrouillage thermique (14, 15) sont un premier trou à verrouillage thermique (14) situé dans la première portion à verrouillage thermique (131) et un second trou à verrouillage thermique (15) situé dans la seconde portion à verrouillage thermique (133).

4. Dispositif de sécurité selon la revendication 4, dans lequel la première portion à verrouillage thermique (131), la seconde portion à verrouillage thermique (133) et la portion de fusion (132) présentent toutes une structure symétrique, la première portion à verrouillage thermique (131) est munie d'un premier bord (1311) et d'un deuxième bord (1312) qui sont symétriques en position et en forme, la seconde portion à verrouillage thermique (133) est munie d'un troisième bord (1331) et d'un quatrième bord (1332) qui sont symétriques en position et en forme, la portion de fusion (132) est munie d'un cinquième bord (1321) et d'un sixième bord (1322) qui sont symétriques en position et en forme, le premier bord (1311), le cinquième bord (1321) et le troisième bord (1331) sont connectés séquentiellement, et dans lequel le deuxième bord (1312), le sixième bord (1322) et le quatrième bord (1332) sont connectés séquentiellement.

5. Dispositif de sécurité selon l'une quelconque des revendications 4 à 5, dans lequel le premier trou à verrouillage thermique (14) et le second trou à verrouillage thermique (15) sont symétriques en forme, et le premier trou à verrouillage thermique (14) présente le même axe de symétrie que la première portion à verrouillage thermique (131), et le second trou à verrouillage thermique (15) présente le même axe de symétrie que la seconde portion à verrouillage thermique (133).

6. Dispositif de sécurité selon l'une quelconque des revendications 5 ou 6, dans lequel une distance maximale du cinquième bord (1321) au sixième bord (1322) est inférieure ou égale à une distance minimale du premier bord (1311) au deuxième bord (1312), et également inférieure ou égale à une distance minimale du troisième bord (1331) au quatrième bord (1332).

7. Dispositif de sécurité selon la revendication 7, dans lequel une somme de deux distances minimales de deux positions symétriques quelconques sur le premier bord (1311) et le deuxième bord (1312) au premier trou à verrouillage thermique (14) est supérieure à une distance minimale du cinquième bord (1321) au sixième bord (1322).

8. Dispositif de sécurité selon l'une quelconque des revendications 7 ou 8, dans lequel une somme de deux distances minimales de deux positions symétriques quelconques sur le troisième bord (1331) et le quatrième bord (1332) au second trou à verrouillage thermique (15) est supérieure à une distance minimale du cinquième bord (1321) au sixième côté (1322).

9. Dispositif de sécurité selon l'une quelconque des revendications précédentes, dans lequel le trou à verrouillage thermique (14, 15) est rempli d'un matériau fusible.

10. Dispositif de sécurité selon l'une quelconque des revendications 4 à 10, dans lequel la portion de fusion (132) est munie d'un trou de fusion (1323) présentant une forme symétrique.

11. Dispositif de sécurité selon la revendication 11, dans lequel le trou de fusion (1323) est rempli d'un matériau fusible auxiliaire.

12. Dispositif de sécurité selon l'une quelconque des revendications 4 à 12, dans lequel la portion de fusion (132) est formée d'un seul tenant avec la première portion à verrouillage thermique (131) et la seconde portion à verrouillage thermique (133).

13. Dispositif de sécurité selon l'une quelconque des revendications 4 à 12, dans lequel la portion de fusion (132) présente une liaison soudée avec la première portion à verrouillage thermique (131) et la seconde portion à verrouillage thermique (133), la première portion à verrouillage thermique (131) et la seconde portion à verrouillage thermique (133) sont constituées d'un matériau hautement thermoconducteur, et dans lequel la portion de fusion (132) est constituée d'un matériau de fusion.

14. Bloc-batterie, comprenant :
un boîtier ;
une carte de circuit imprimé (101) disposée dans le boîtier ;
un dispositif de sécurité (10, 20, 30, 40, 50) selon l'une quelconque des revendications précédentes monté sur la carte de circuit imprimé (101) pour empêcher une surintensité.
